# EUROPÄISCHE PATENTSCHRIFT

(11) **EP 0 583 507 B1**
(45) Veröffentlichungstag und Bekanntmachung des Hinweises auf die Patenterteilung: **27.03.1996**
(21) Anmeldenummer: 92120541.5
(22) Anmeldetag: 02.12.1992
(51) Int. Cl.: F01N 3/02

(54) **Russfilter mit Heissgaserzeuger**
Soot filter with hot gas generator
Filtre à suie avec générateur de gaz chaud

(30) Priorität: 14.08.1992 DE 4226901
(43) Veröffentlichungstag der Anmeldung: 23.02.1994
(73) Patentinhaber: ERNST APPARATEBAU GmbH & Co., D-58099 Hagen (DE)
(72) Erfinder: Teuber-Ernst, Hildemarie, Dipl.-Kfm., W-5800 Hagen 1 (DE)
(74) Vertreter: COHAUSZ HASE DAWIDOWICZ & PARTNER

(56) Entgegenhaltungen:
- EP-A- 0 306 743
- EP-A- 0 472 008
- DE-A- 3 545 437
- US-A- 4 573 317
- US-A- 4 899 540

## Beschreibung

Die Erfindung betrifft ein Filtersystem mit externer Regeneration, das einen am Kraftfahrzeug befestigten Rußfilter für Dieselmotoren mit einer Abzweigung mit zwei Einlässen und einen am Rußfilter lösbar angeschlossenen, externen, mobilen Heißgaserzeuger enthält.

Es ist bekannt, Rußfilter am Kraftfahrzeug lösbar zu befestigen und ohne Brenner auszustatten, so daß insbesondere am Tagesende der Rußfilter vom Kraftfahrzeug abgenommen und in eine Vorrichtung gesetzt wird, die einen Brenner enthält, der den angesammelten Ruß abbrennt. Das regelmäßige Lösen des Filters vom Kraftfahrzeug und spätere wieder Befestigen ist ein erheblicher Arbeitsaufwand und birgt eine Verletzungsgefahr, da die Filtergehäuse nach Ankunft des Kraftfahrzeugs sehr heiß sind.

Auch sind Ausführungsarten bekannt, bei denen der Rußfilter fest am Kraftfahrzeug angebracht ist. So ist beispielsweise aus der EP 0 472 008 ein Filter bekannt, der mit externer Wärmezufuhr für das Abbrennnen des angesammelten Rußes (Regeneration) arbeitet.

Aufgabe der Erfindung ist es, ein konstruktiv einfaches, preiswertes und leicht handhabbares Rußfiltersystem zu schaffen, das kleine Außenabmessungen aufweist, einen sicheren und dichten Halt bietet und bei kurzer Regenerationszeit zu einem geringen Arbeitsaufwand führt.

Diese Aufgabe wird erfindungsgemäß dadurch gelöst, daß das Anschlußrohr des Heißgaserzeugers in den zweiten Einlaß der Abzweigung eingesteckt ist und in dieser Position den ersten Einlaß des Rußfilters verschließt.

Hierdurch kann der Filter stets am Kraftfahrzeug verbleiben, da die insbesondere mobile Regenerierungsvorrichtung am Kraftfahrzeug anschließbar ist. Die Handhabung ist einfach und birgt insich keine Verletzungsgefahr. Das Filtergehäuse weist geringe Außenabmessungen auf und der gesamte Filter ist konstruktiv einfach und preiswert in der Herstellung.

Da bei angeschlossenem Heißgaserzeuger die Motorenabgaszufuhr zum Filter verschlossen ist, wird selbstätig ausgeschlossen, daß die Heißgase in den Motor des Kraftfahrzeugs gelangen können. Durch das Verschließen des Abgasrohres des Motors wird auch erreicht, daß der Motor selbsttätig gestoppt wird und nicht mehr gestartet werden kann.

Vorzugsweise wird hierbei vorgeschlagen, daß der Anschluß des Filtergehäuses eine Abzweigung aufweist, die einen am Abgasrohr angeschlossenen ersten Einlaß, einen zu dem Filter führenden Auslaß und einen zweiten Einlaß aufweist, an dem der Heißgaserzeuger lösbar anschließbar ist. Damit wird bei einfacher Konstruktion eine sichere und leichte Handhabung erreicht.

Eine konstruktiv besonders einfache und leicht und sicher handhabbare Ausführung wird dadurch geschaffen, daß am Heißgaserzeuger ein Rohr befestigt ist, dessen freies Ende an der Abzweigung lösbar befestigt ist, wobei im befestigten Zustand der erste Einlaß verschlossen ist. Hierbei kann der erste Einlaß durch das in den zweiten Einlaß eingesteckte Rohr des Heißgaserzeugers verschlossen sein.

Eine widerstandsfreie Strömung der Abgase während der Fahrt und eine leichte Erreichbarkeit des Abzweigung durch den Heißgaserzeuger wird geschaffen, wenn der zweite Einlaß quer zum ersten Einlaß und zum Auslaß angeordnet ist. Hierbei sollte das Rohr nahe seines freien Ende in der Seitenwand eine Auslaßöffnung aufweisen, die sich zum Auslaß hin öffnet. Auch ist hierbei von Vorteil, wenn die Wand des Rohres den ersten Einlaß verschließt.

Alternativ wird vorgeschlagen, daß der erste Einlaß quer zum zweiten Einlaß und zum Auslaß angeordnet ist.

Eine hohe Flexibilität und Anpassungsfähigkeit an Abgasrohre mit verschieden großen Durchmessern wird erreicht, wenn das Rohr über ein Kupplungszwischenteil mit dem Heißgaserzeuger verbunden ist. Hierbei können am Kupplungszwischenteil auf der dem Heißgaserzeuger abgewandten Seite Rohre unterschiedlichen Durchmessers lösbar befestigbar sein.

Eine gute Abdichtung wird erreicht, wenn der zweite Einlaß einen Innendurchmesser aufweist, der dem Außendurchmesser des Rohres etwa entspricht. Von größtem Vorteil ist es, wenn die Abzweigung innen eine Ausnehmung aufweist, deren Innendurchmesser dem Außendurchmesser des Rohres entspricht und in der das freie Ende des Rohres einliegt. Hierdurch wird der Heißgaserzeuger sicher gehalten, so daß für den Benutzer beide Hände frei sind, zum Öffnen und Schließen des Verschlusses.

Ein konstruktiv besonders einfacher und leicht handhabbarer Heißgaserzeuger wird geschaffen, wenn er einen Öl- oder Gasbrenner aufweist, hinter dessen Brennkammer in Gasströmungsrichtung eine Erwärmungskammer angeordnet ist, in die die Flammgase gelangen und die in der Innenwand Öffnungen aufweist, durch die Luft zuführbar ist.

Besonders vorteilhaft ist es, wenn der die Heißluft erzeugende Brenner am Ende eines flexiblen Schlauches und/oder einer Leitung befestigt ist, der bzw. die den Brenner mit dem weitere Komponenten enthaltenden Wagen der Regenerationseinheit verbindet, wobei der Brenner mit einem kurzen Anschlußstück am Rußfiltergehäuse lösbar befestigbar ist. Hierdurch wird der Verbindungsschlauch zwischen der mobilen Station und dem Kraftfahrzeug filtergehäuse nicht vom Heißgas durchströmt, so daß nicht nur die Verletzungsgefahr weiter verringert wird, sondern auch das Heißgas mit optimal hoher Temperatur in den Filter gelangt.

Vier Ausführungsbeispiele der Erfindung sind in den Zeichnungen in senkrechten Schnitten dargestellt und werden im folgenden näher beschrieben. Es zeigen:

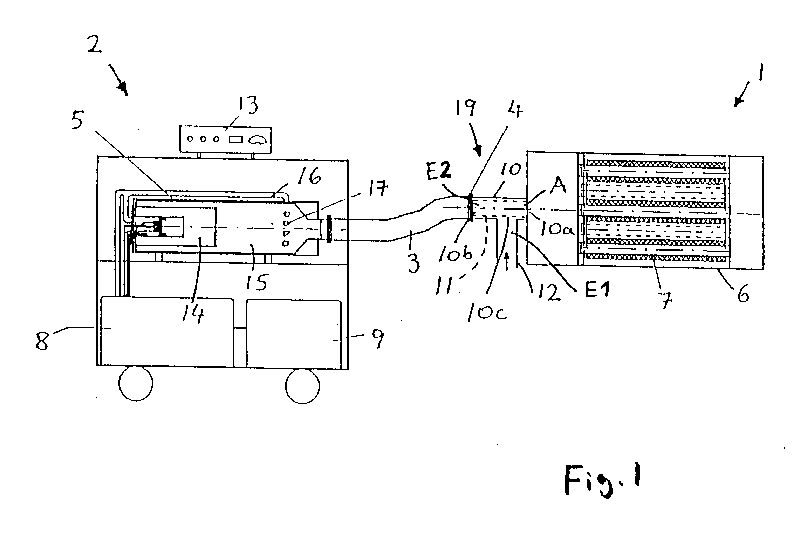

- Figur 1:: Ein erstes Ausführungsbeispiel mit am Kraftfahrzeug befestigtem Filter, bzw. Filtergehäuse, wobei das Kraftfahrzeug selber nicht dargestellt ist und
- Figur 2:: ein zweites Ausführungsbeispiel.
- Figur 3:: Ein drittes Ausführungsbeispiel mit dünnerem Auspuffrohr.
- Figur 4:: Das dritte Ausführungsbespiel mit dickerem Auspuffrohr.

Beim erfindungsgemäßen Filtersystem mit externer Regeneration ist am Kraftfahrzeug ein Filter 1 lösbar befestigt und eine Regenerationseinheit 2 vom Kraftfahrzeug getrennt angeordnet. Das System wird verwendet bei Fahrzeugen, die während eines Tages einmal einen Standort zum Regenerieren des Filters anfahren. Die Größe des Filters 1 wird so ausgelegt, daß es eine Beladungsdauer von 1,5 bis 2 Tagen aufweist. Kommt das Fahrzeug am Fahrtende zur externen stationären, aber mobilen Regenerationseinheit 2, so wird über einen thermisch isolierten, flexiblen Heißgasschlauch 3 die Regenerationseinrichtung an das Filter angekoppelt. Dies geschieht über einen Schnellverschluß 4.

Kernstück der Regenerationseinheit 2 ist ein Reingasbrenner 5. Er erzeugt aus angesaugter Frischluft ein Heißgas von etwa 700-800 Grad. Diese Heißluft strömt während der Regeneration durch das Filter 1 und entzündet den dort angesammelten Ruß. Nach etwa 5 bis 7 Minuten ist (je nach Filtergröße) das Filter freigebrannt und das Fahrzeug wieder betriebsbereit. Die Regenerationseinheit 2 steht danach zum Säubern weiterer Filter zur Verfügung.

Das Filter 1 weist ein hochtemperaturbeständiges Gehäuse 6 aus Stahl auf, in dem Keramik-Wickelfilter-Kerzen angeordnet sind. Die Abgase treten in das Filtergehäuse 6 ein und durchströmen die darin befindlichen Filterkerzen 7. Die Partikel aus Rußkerzen mit ihren angelagerten Kohlenwasserstoffen werden durch die keramischen Wickelkerzen 7 zurückgehalten, so daß nur gereinigtes Gas aus dem Filter 1 austritt.

Durch den modularen Aufbau des Filters 1 kann das Filter an jeden Fahrzeugtyp angepaßt werden. Hierbei richtet sich die Anzahl der Filterkerzen 7 nach den fahrzeugspezifischen Daten wie Hubraum, Leistung und Zustand des Motors. Anhand dieser Daten wird das Filter so dimensioniert, daß es je nach Bedarf eine 1,5 bis 2-tägige Beladungsdauer ermöglicht.

Eine im Fahrerhaus angebrachte Anzeige signalisiert dem Fahrzeugführer ständig den Beladungszustand des Filters 1. Der Abgasgegendruck ist hierbei eine für den Beladungszustand des Filters charakteristische Größe.

Die Regenerationseinheit 2 weist einen Reingasbrenner 5, eine Komponentenbox 8, einen Kraftstofftank 9 und eine Bedienungseinheit 13 auf. Der Heißgasbrenner 5 besitzt eine Brennkammer 14, die in eine Erwärmungskammer 15 mündet, die ringförmig von einer Außenkammer 16 umgeben ist. Der Außenkammer 16 wird Frischluft zugeführt, die über Öffnungen 17 in der Wand der Erwärmungskammer 15 in diese gelangt. Verbrennung, Flammenverlauf und Kühlung werden hierdurch optimiert.

Am Reingasbrenner 5 ist ausgangsseitig ein thermisch isolierter Heißgasschlauch 3 befestigt, der über einen Schnellverschluß 4 an das beladene Filter 1 angeschlossen wird. Am Filtereingang ist ein T-förmiges Rohr 10 als Abzweigung 19 befestigt. Ein erster Einlaß E1 dient zur Zuführung des Abgases zum Filter, das andere Ende 10b ist zur Fahrzeugaußenseite hingeführt, bildet dort einen zweiten Einlaß E2 und ist durch einen Blindflansch und einen Schnellverschluß 4 verschlossen. Dieses Ende ist thermisch isoliert. Zur Regeneration wird der Blindflansch entfernt und der Heißgasschlauch 3 befestigt. Während der Regeneration verbleibt also das Filter am Fahrzeug - das Einströmen der etwa 700-800 Grad heißen Luft in den motorzugewandten Abgasstrang wird auf konstruktivem Wege wie folgt verhindert: Am Ende des Heißgas-Verbindungsschlauches 3 steht ein Rohrstück 11 als Anschlußrohr vor, das in das Rohr 10 einsteckbar ist. In das Rohr 10 mündet seitlich das Abgasrohr 12 des Dieselmotors als Einlaß E1, so daß bei eingestecktem Rohrstück 11 die Mündung des Einlasses E1 verschlossen ist.

Wie der Heißgasschlauch 3 und das Filter 1 ist auch der Reingasbrenner 5 thermisch isoliert. Die Regenerationseinheit 2 wird mit 220 Volt versorgt, die elektrische Leistungsaufnahme beträgt etwa 1,2 kW. Die Regenerationseinheit sitzt in einem fahrbaren Schrank.

Nur wenn der Heißgasschlauch 3 an den Filter 1 angeflanscht ist, läßt sich der Brenner 5 starten. Der zur Verbrennung notwendige Kraftstoff wird über eine Pumpe aus dem Kraftstofftank 9 entnommen. Bei der Verbrennung entsteht eine Heizleistung von ca. 25 kW bei einem Kraftstoffverbrauch von etwa 2 Liter pro Stunde. Die Regenerationszeit liegt je nach Filtergröße zwischen 5 und 7 Minuten.

Durch Einschieben einer Lochkarte in die Bedienungseinheit 13 stellt sich automatisch die fahrzeugspezifische Regeneration ein. Das Aufleuchten einer Lampe zeigt das Ende der Regenerationszeit an. Während der Regeneration wird die noch verbleibende Regenerationszeit auf einer Digitalanzeige ausgegeben. Dies ermöglicht dem Bedienungspersonal abzuschätzen, ob eine bereits begonnene Regeneration erst beendet werden soll, wenn das betreffende Fahrzeug augenblicklich zu einem Arbeitseinsatz angefordert wird. das Unterbrechen einer Regeneration ist durch Drücken der Stop-Taste möglich. Eine Tankanzeige zeigt den Kraftstoffvorrat an. Ein am Filter sitzendes Thermometer gibt, falls das Filter über einen ausreichend langen Zeitraum einer Temperatur über 650 Grad ausgesetzt wurde, das Signal zum Resetten der Beladungsanzeige im Fahrerhaus.

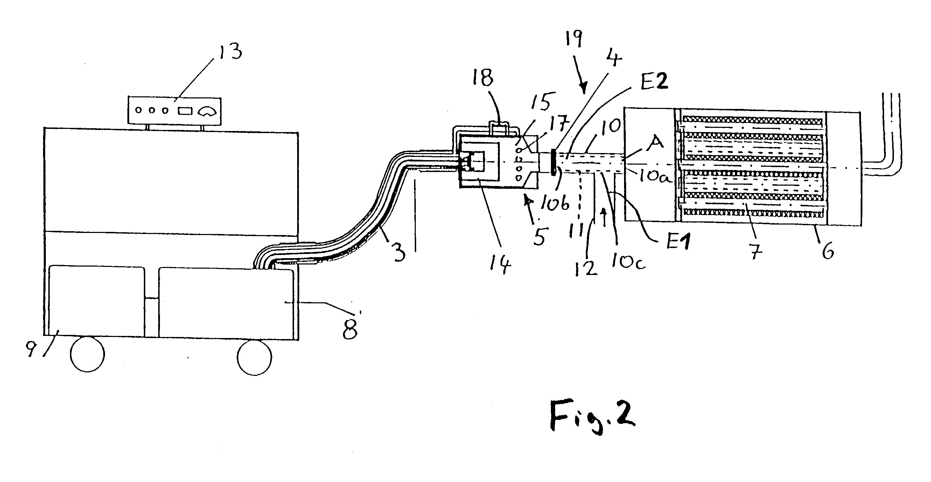

Im zweiten Ausführungsbeispiel nach Figur 2 ist der Brenner 5 nicht innerhalb oder außen an der Regenerationseinheit 2 angeordnet, sondern der Brenner 5 ist am äußeren Enden des Schlauches 3 befestigt, der die Regenerationseinheit 2 mit dem Filter 1 verbindet. Damit ist der Brenner 5 eine tragbare, bewegliche Einheit mit oberem Griff 18, die mit ihrem vorstehenden Anschluß (Anschlußrohr 11) am Filtergehäuse 6 in gleicher Weise befestigbar ist, wie oben zum Schlauch 3 beschrieben. Hierdurch ist der Schlauch 3 nicht mehr von Heißgasen durchströmt.

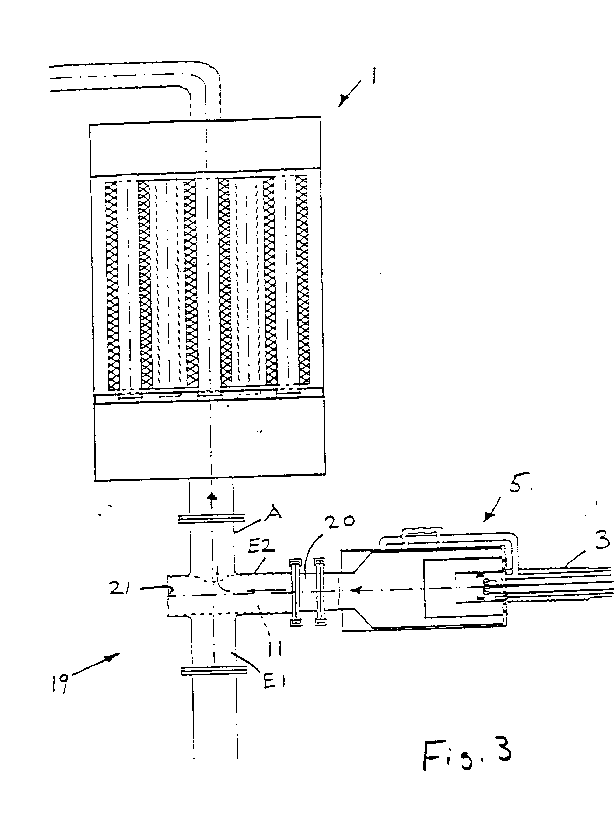

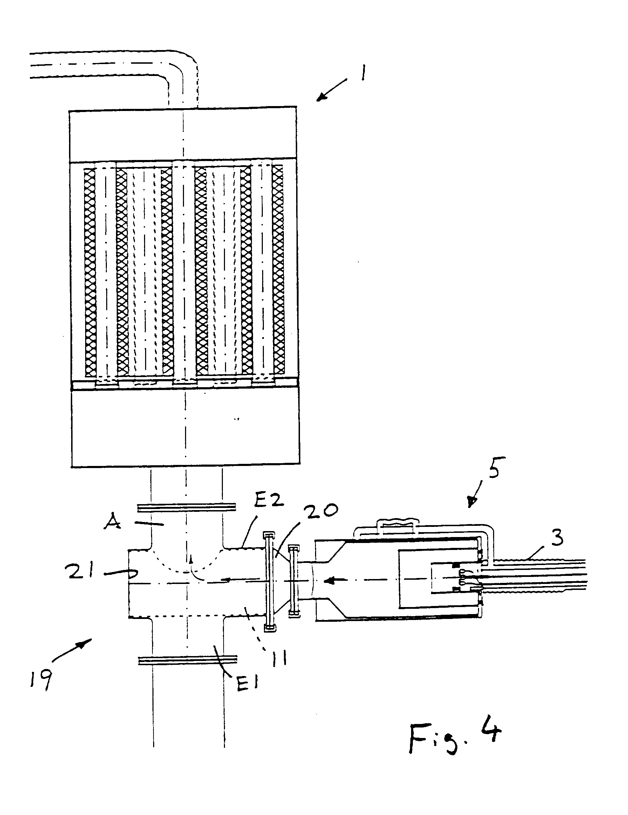

Im dritten Ausführungsbeispiel nach Figur 3 und 4 fluchten erster Einlaß E1, Abgaseinlaß und Aulaß A (zum Filter) miteinander und der zweite Einlaß E2 (Heißgaseinlaß) mündet rechtwinklig zwischen E1 und A. Der Heißgaserzeuger 5 wird damit mit seinem Rohr 11 rechtwinklig zu den Rohren von E1 und A in den zweiten Einlaß E2 eingesteckt. Hierbei strömt das Heißgas von dem Heißgaserzeuger 5 über eine seitliche Öffnung 11a im Rohr 11 in den Auslaß A. Die übrige Rohrwandung des Rohrs 11 verschließt den ersten Einlaß E1.

Die Abzweigung 19 weist innen eine Ausnehmung 21 auf, deren Innendurchmesser dem Außendurchmesser des Rohres 11 entspricht und in der das freie Ende des Rohres 11 einliegt. Das Rohr 11 ist über ein Kupplungszwischenteil 20 mit dem Heißgaserzeuger 5 verbunden. Hierdurch sind am Kupplungszwischenteil 20 auf der dem Heißgaserzeuger 5 abgewandten Seite Rohre 11 unterschiedlichen Durchmessers lösbar befestigbar.

## Patentansprüche

1. Filtersystem mit externer Regeneration, das einen am Kraftfahrzeug befestigten Rußfilter für Dieselmotoren mit einer Abzweigung mit zwei Einlässen und einen am Rußfilter lösbar angeschlossenen, externen, mobilen Heißgaserzeuger enthält,
**dadurch gekennzeichnet**,
daß das Anschlußrohr (11) des Heißgaserzeugers (5) in den zweiten Einlaß (E2) der Abzweigung eingesteckt ist und in dieser Position den ersten Einlaß (E1) des Rußfilters (1) verschließt.

2. Filtersystem nach Anspruch 1, **dadurch gekennzeichnet** , daß die Abzweigung (19) einen zu dem Filter (1) führenden Auslaß (A) aufweist und der zweite Einlaß (E2) quer zum ersten Einlaß (E1) und zum Auslaß (A) angeordnet ist.

3. Filtersystem nach Anspruch 2, **dadurch gekennzeichnet** , daß das Rohr (11) nahe seines freien Endes in der Seitenwand eine Auslaßöffnung (11a) aufweist, die sich zum Auslaß (A) hin öffnet.

4. Filtersystem nach Anspruch 1, **dadurch gekennzeichnet** , daß die Abzweigung (19) einen zu dem Filter (1) führenden Auslaß (A) aufweist und der erste Einlaß (E1) quer zum zweiten Einlaß (E2) und zum Auslaß (A) angeordnet ist.

5. Filtersystem nach einem der Ansprüche 2 bis 4, **dadurch gekennzeichnet** , daß die Wand des Rohres (11) den ersten Einlaß (E1) verschließt.

6. Filtersystem nach einem der vorhergehenden Ansprüche, **dadurch gekennzeichnet**, daß das Rohr (11) über ein Kupplungszwischenteil (20) mit dem Heißgaserzeuger (5) verbunden ist.

7. Filtersystem nach Anspruch 6, **dadurch gekennzeichnet** , daß am Kupplungszwischenteil (20) auf der dem Heißgaserzeuger (5) abgewandten Seite Rohre (11) unterschiedlichen Durchmessers lösbar befestigbar sind.

8. Filtersystem nach einem der vorhergehenden Ansprüche, **dadurch gekennzeichnet**, daß der zweite Einlaß (E2) einen Innendurchmesser aufweist, der dem Außendurchmesser des Rohres (11) etwa entspricht.

9. Filtersystem nach einem der vorhergehenden Ansprüche, **dadurch gekennzeichnet**, daß die Abzweigung (19) innen eine Ausnehmung (21) aufweist, deren Innendurchmesser dem Außendurchmesser des Rohres (11) entspricht und in der in das freie Ende des Rohres (11) einliegt.

10. Filtersystem nach einem der vorhergehenden Ansprüche, **dadurch gekennzeichnet**, daß der Heißgaserzeuger (5) einen Öl- oder Gasbrenner aufweist, hinter dessen Brennkammer (14) in Gasströmungsrichtung eine Erwärmungskammer (15) angeordnet ist, in die die Flammgase gelangen und die in der Innenwand Öffnungen (17) aufweist, durch die Luft zuführbar ist.

11. Filtersystem nach einem der vorhergehenden Ansprüche, **dadurch gekennzeichnet**, daß der die Heißluft erzeugende Heißgaserzeuger (5) am Ende eines flexiblen Schlauches (3) und/oder einer Leitung befestigt ist, der bzw. die den Brenner (5) mit dem weitere Komponenten enthaltenden Wagen der Regenerationseinheit (2) verbindet.

## Claims

1. A filter system with external regeneration, which comprises a diesel engine soot filter attached to the motor vehicle and having a branch with two inlets and an external mobile hot gas generator releasably connected to the soot filter, characterized in that the connecting pipe (11) of the hot gas generator (5) is inserted into the second inlet (E2) of the branch and in that position closes the first inlet (E1) of the soot filter (2).

2. A filter system according to claim 1, characterized in that the branch (19) has an outlet (A) extending to the filter (1), and the second inlet (E2) is disposed transversely of the first inlet (E1) and the outlet (A).

3. A filter system according to claim 2, characterized in that adjacent its free end the side wall of the pipe (11) is formed with an outlet aperture (11a) which opens in the direction of the outlet (A).

4. A filter system according to claim 1, characterized in that the branch (19) has an outlet (A) extending to the filter (1), and the first inlet (E1) is disposed transversely of the second inlet (E2) and the outlet (A).

5. A filters system according to one of claims 2 to 4, characterized in that the wall of the pipe (11) closes the first inlet (E1).

6. A filter system according to one of the preceding claims, characterized in that the pipe (11) is connected via an intermediate coupling member (20) to the hot gas generator (5).

7. A filter system according to claim 6, characterized in that pipes (11) of different diameter are releasably attachable to the intermediate coupling member (20) on the side remote from the hot gas generator (5).

8. A filter system according to one of the preceding claims, characterized in that the second inlet (E2) has an internal diameter substantially corresponding to the external diameter of the pipe (11).

9. A filter system according to one of the preceding claims, characterized in that the branch (19) is formed internally with a recess (21) whose internal diameter corresponds to the external diameter of the pipe (11) and in which the free end of the pipe (11) is contained.

10. A filter system according to one of the preceding claims, characterized in that the hot gas generator (5) has an oil or gas burner downstream of whose burner chamber (14) there is disposed in the direction of gas flow a heating chamber (15) into which the flame gases pass and whose inner wall is formed with apertures (17) through which air can be supplied.

11. A filter system according to one of the preceding claims, characterized in that the hot gas generator (5) generating the hot air is attached to the end of a flexible hose (3) and/or a line which connects the burner (5) to the carriage of the regeneration unit (2) which contains further components.

## Revendications

1. Système de filtration à régénération externe qui comprend un filtre à suies pour moteurs diesel fixé au véhicule automobile, avec une dérivation à deux entrées et un générateur de gaz chaud mobile externe raccordé de manière démontable au filtre à suies,
caractérisé en ce que le tube de raccordement (11) du générateur de gaz chaud (5) est enfoncé dans la seconde entrée (E2) de la dérivation et, dans cette position, obture la première entrée (E1) du filtre à suies.

2. Système de filtration selon la revendication 1,
caractérisé en ce que la dérivation (19) présente une sortie (A) conduisant au filtre (1) et la seconde entrée (E2) est disposée transversalement à la première entrée (E1) et à la sortie (A).

3. Système de filtration selon la revendication 2,
caractérisé en ce que le tube (11) présente dans la paroi latérale, près de son extrémité libre, une ouverture de sortie (11a) qui s'ouvre en direction de la sortie (A).

4. Système de filtration selon la revendication 1,
caractérisé en ce que la dérivation (19) présente une sortie (A) conduisant au filtre (1) et la première entrée (E1) est disposée transversalement à la seconde entrée (E2) et à la sortie (A).

5. Système de filtration selon l'une des revendications 2 à 4,
caractérisé en ce que la paroi du tube (11) obture la première entrée (E1).

6. Système de filtration selon l'une des revendications précédentes,
caractérisé en ce que le tube (11) est relié au générateur de gaz chaud (5) par une pièce intermédiaire d'accouplement (20).

7. Système de filtration selon la revendication 6,
caractérisé en ce que des tubes (11) de diamètres différents peuvent être fixés de manière démontable à la pièce intermédiaire d'accouplement (20), sur le côté écarté du générateur de gaz chaud (5).

8. Système de filtration selon l'une des revendications précédentes,
caractérisé en ce que la seconde entrée (E2) présente un diamètre intérieur qui correspond à peu près au diamètre extérieur du tube (11).

9. Système de filtration selon l'une des revendications précédentes,
caractérisé en ce que la dérivation (19) présente à l'intérieur un évidement (21) dont le diamètre intérieur correspond au diamètre extérieur du tube (11) et dans lequel est logée l'extrémité libre du tube (11).

10. Système de filtration selon l'une des revendications précédentes,
caractérisé en ce que le générateur de gaz chaud (5) présente un brûleur à huile ou à gaz derrière la chambre de combustion (14) duquel est disposé, dans la direction d'écoulement du gaz, une chambre d'échauffement (15) dans laquelle arrivent les gaz de flamme et qui présente dans sa paroi intérieure des ouvertures (17) à travers lesquelles peut être amené de l'air.

11. Système de filtration selon l'une des revendications précédentes,
caractérisé en ce que le générateur de gaz chaud (5) générant l'air chaud est fixé à l'extrémité d'un tuyau flexible (3) et/ou d'une conduite qui relient le brûleur (5) au véhicule de l'unité de régénération (2) contenant d'autres composants.
